# DEMANDE DE BREVET EUROPEEN

(11) **EP 2 192 482 A1**
(43) Date de publication de la demande: **02.06.2010**
(21) Numéro de dépôt: 09176582.6
(22) Date de dépôt: 20.11.2009
(51) Int. Cl.: G06F 9/38, G06F 15/78, G06F 15/80

(54) **Système multiprocessor sur puce**

(30) Priorité: 21.11.2008 FR 0806552
(71) Demandeur: Thales, 92200 Neuilly Sur Seine (FR)
(72) Inventeur: Yehia, Sami, 92100 Boulogne Billancourt (FR)
(74) Mandataire: Esselin, Sophie

(57) **Abrégé**

L'invention concerne un système multiprocesseur sur puce électronique (300) comprenant au moins deux tuiles de calcul, chacune des tuiles de calcul comportant un processeur généraliste, et des moyens d'accès à un réseau de communication (320), lesdites tuiles de calcul étant reliées entre elles par ledit réseau de communication, ledit système multiprocesseur étant **caractérisé en ce que** :
- un processeur généraliste mettant en oeuvre un jeu d'instructions qui définit l'ensemble des opérations à exécuter par ledit processeur, les processeurs généralistes ont le même jeu d'instructions ;
- au moins une des tuiles de calcul comprend, en outre, un accélérateur couplé au processeur généraliste accélérant des tâches de calcul dudit processeur généraliste.

## Description

L'invention concerne les architectures embarquées et plus précisément les architectures parallèles sur puce électronique.

Les besoins de l'industrie militaire et civile en terme de calcul n'ont cessé de croître durant ces dernières années. Ces besoins se sont surtout exprimés dans le domaine des systèmes embarqués notamment en matière de traitement de signal et d'image. Ils se caractérisent aussi par de fortes contraintes, parfois contradictoires, de consommation d'énergie, de haute performance et de traitement temps réel.

Afin de répondre à ces fortes contraintes, aussi bien dans les systèmes embarqués que dans les systèmes haute-performance, et suite à la montée en fréquence des nouvelles technologies d'intégration, deux voies de recherche complémentaires se sont dégagées : le parallélisme et la spécialisation. Le parallélisme consiste à réaliser de façon simultanée différentes tâches de calcul sur différents processeurs. Des architectures dédiées au parallélisme, dites architectures parallèles, sont constituées par plusieurs unités de calcul, appelées tuiles de calcul, reliées entre elles par un réseau de communication. Une tuile comprend généralement un processeur et des moyens pour dialoguer avec le réseau de communication.

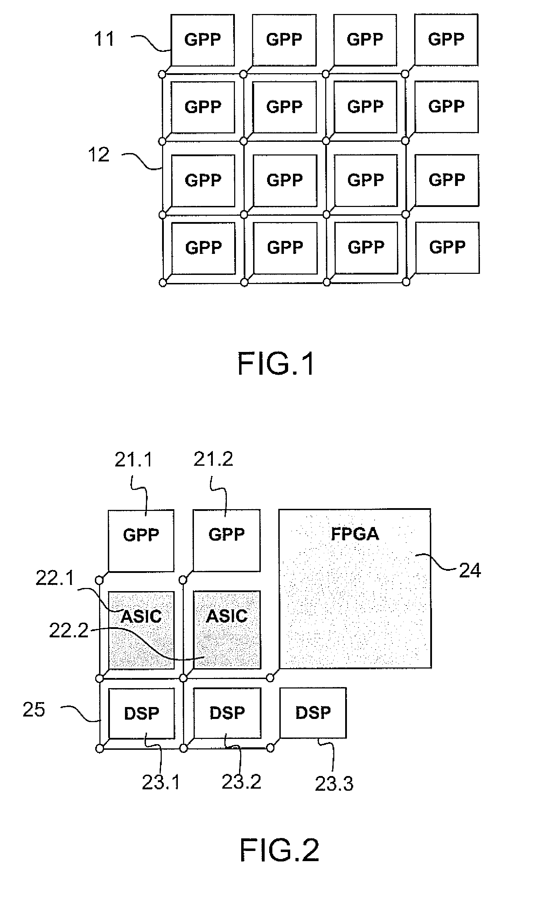

Dans la plupart des architectures parallèles selon l'art connu, le parallélisme repose sur des tuiles identiques dites tuiles homogènes. La figure 1 représente un exemple d'architecture parallèle homogène. Cette architecture comprend seize tuiles de processeurs généralistes 11 reliées entre elles par un réseau de communication 12. Le microprocesseur Quad core d'Intel et le microprocesseur Tile64 de Tilera sont deux exemples de telles architectures.

Dans ce modèle les tuiles de calculs sont identiques ; elles ont le même jeu d'instructions et la même architecture. Le jeu d'instructions d'un processeur est l'ensemble des opérations que ce processeur peut exécuter. Le jeu d'instruction influe directement sur la manière de programmer un traitement sur processeur. Ainsi le modèle de programmation ne différentie pas entre elles. C'est à dire que le programmeur (ou un paralléliseur automatique) a pour rôle de décrire le parallélisme sans avoir à décrire dans quelle tuile chaque tâche s'exécutera.

Selon l'art connu, une variante d'architecture parallèle homogène consiste à associer un processeur maître à des accélérateurs identiques. Le processeur cell d'IBM est un exemple d'une telle architecture.

Selon l'art connu, dans le domaine des systèmes embarqués, la spécialisation du calcul en utilisant des unités spécialisées et des accélérateurs est utilisée pour répondre à des besoins de performance et consommation d'énergie. Contrairement aux processeurs dits « généralistes » (qui sont aptes à exécuter un large spectre d'applications), les accélérateurs sont dédiés et optimisés pour accélérer différentes tâches telles que la vidéo, les fonctions de communication ou le traitement d'images. Des architectures parallèles intégrant de tels circuits spécialisés sont appelées architectures parallèles hétérogènes. La figure 2 représente un exemple d'architecture parallèle hétérogène. Cette architecture comprend, d'une part, des tuiles de processeurs généralistes 21.1, 21.2 et, d'autres part, des tuiles de processeurs spécialisés: trois circuits spécialisés 23.1,23.2,23.3 dans le traitement du signal de type DSP (acronyme de l'expression anglo-saxonne Digital Signal Processor), deux circuits dédiés de type ASIC 22.1,22.2 (acronyme de l'expression anglo-saxonne Application-Specific lntegrated Circuit) et un circuit reconfigurable 24 de type FPGA (acronyme de l'expression anglo-saxonne Field-Programmable Gate Array). Ces tuiles sont reliées entre elles par un réseau de communication 25. Le système Nomadik de ST est un exemple d'une telle architecture.

Une architecture hétérogène se compose d'une multitude de tuiles hétérogènes. Certaines de ces tuiles sont des processeurs généralistes d'autres des accélérateurs dédiés, programmables ou pas. Les accélérateurs dédiés hétérogènes permettent une efficacité accrue en terme de performance et de consommation. Par contre, dans ces architectures, le modèle de programmation est plus complexe. Le programmeur doit explicitement décrire la correspondance entre les tâches et chacune des tuiles différentes de l'architecture. La chaîne de compilation doit aussi prendre en compte différent jeux d'instructions, modes d'exécutions et interfaces hétérogènes, ce qui la complique substantiellement.

L'architecture RECORE est un autre exemple d'une architecture hétérogène. Cette architecture associe un processeur généraliste, dit processeur « maître » et des tuiles hétérogènes. Dans cette approche, les accélérateurs sont fixés durant la conception de l'architecture et la parallélisation (le modèle de programmation) dépend de ces accélérateurs. Ceci a pour inconvénient d'induire une forte corrélation entre la parallélisation et l'architecture cible.

L'invention vise à pallier les problèmes cités précédemment en proposant un système multiprocesseur offrant des capacités de calcul améliorées tout en conservant une facilité de programmation.

A cet effet, l'invention a pour objet un système multiprocesseur sur puce électronique comprenant au moins deux tuiles de calcul, chacune des tuiles de calcul comportant un processeur généraliste, et des moyens d'accès à un réseau de communication, lesdites tuiles de calcul étant reliées entre elles par ledit réseau de communication, ledit système multiprocesseur étant **caractérisé en ce que** :
- un processeur généraliste mettant en oeuvre un jeu d'instructions qui définit l'ensemble des opérations à exécuter par ledit processeur, les processeurs généralistes ont le même jeu d'instructions ;
- au moins une des tuiles de calcul comprend, en outre, un accélérateur couplé au processeur généraliste accélérant des tâches de calcul dudit processeur généraliste.

Selon une caractéristique de l'invention, le système est apte à exécuter un programme parallèle développé pour un système multiprocesseurs homogènes sans modification du programme.

Selon une caractéristique de l'invention, une tuile de calcul comprend, en outre, une mémoire locale.

Selon une caractéristique de l'invention, le système comprenant une mémoire principale, une tuile de calcul comprend, en outre, un dispositif d'accès direct à la mémoire permettant le transfert des données entre la mémoire principale et la mémoire locale.

Selon une caractéristique de l'invention, l'accélérateur est de type : circuit intégré dédié, ou accélérateur programmable, par exemple un circuit spécialisé dans le traitement du signal, ou circuit reconfigurable.

Selon une caractéristique de l'invention, la mémoire principale est physiquement partagée entre les tuiles, chaque tuile pouvant accéder à ladite mémoire principale.

Selon une caractéristique de l'invention, la mémoire principale est physiquement distribuée entre les différentes tuiles, chaque tuile comportant alors une partie de la mémoire principale.

Selon une caractéristique de l'invention, le réseau de communication est de type : bus simple, bus segmenté, boucle ou réseau sur puce.

Un premier avantage du système selon l'invention est qu'il se caractérise par une interface homogène et généraliste (comme les architectures multi-tuiles homogène) par rapport au modèle de programmation tout en préservant une diversité à l'intérieur des tuiles de la puce. Cette interface homogène et généraliste, obtenue en utilisant des processeurs généralistes ayant le même jeu d'instructions, offre un modèle de programmation plus simple que celui des architectures hétérogènes selon l'art connu. La diversité à l'intérieur des tuiles a pour effet d'augmenter les performances de calcul par rapport aux architectures homogènes selon l'art connu.

En utilisant l'invention, un programme est parallelisé comme si toutes les tuiles de calcul étaient des processeurs généralistes. Chaque portion de programme parallélisée est ensuite affectée à une tuile de calcul en fonction notamment de son adéquation avec l'accélérateur de cette tuile ou, au pire des cas, a un processeur généraliste d'une des tuiles comme un multi-tuile homogène. L'invention garantie donc une parfaite compatibilité avec les architectures muiticoeurs homogènes

Cette interface régulière est exprimée par, d'une part, un processeur généraliste sur chaque tuile avec une architecture commune vue par le modèle de programmation et, d'autre part, une interface entre chaque processeur généraliste et l'accélérateur attaché à celui-ci et d'une autre part, un modèle de programmation cohérent et régulier. Ceci à pour avantage de réduire le coût de développement des applications, et permet de réutiliser les outils de programmation des architectures parallèles homogènes déjà existants.

Un autre avantage du système selon l'invention est qu'il permet aussi d'utiliser les modèles de programmation déjà existants pour les architectures parallèles homogènes. Il est ainsi possible d'exécuter directement sur un système selon l'invention, une application qui n'a pas été conçue directement pour celui-ci.

L'invention sera mieux comprise et d'autres avantages apparaîtront à la lecture de la description détaillée faite à titre d'exemple non limitatif et à l'aide des figures parmi lesquelles :
La figure 1, déjà décrite, représente un exemple d'architecture parallèle homogène.
La figure 2, déjà décrite, représente un exemple d'architecture parallèle hétérogène.
La figure 3 représente un exemple d'architecture parallèle selon l'invention.
La figure 4 représente un exemple de tuile de calcul dans une architecture selon l'invention.
La figure 5 montre un exemple d'accélérateur faiblement couplé et une interface logicielle associée.
La figure 6 montre un exemple d'accélérateur moyennement couplé et une interface logicielle associée.
La figure 7 montre un exemple d'accélérateur fortement couplé et une interface logicielle associée.
La figure 8 représente un modèle d'exécution selon l'art connu.
La figure 9 montre un exemple de modèle d'exécution selon l'invention.
La figure 10 montre un exemple de l'exécution d'un programme parallèle sur une architecture homogène sans accélérateur.
La figure 11 montre un exemple de déploiement d'un programme parallèle sur une architecture selon l'invention.

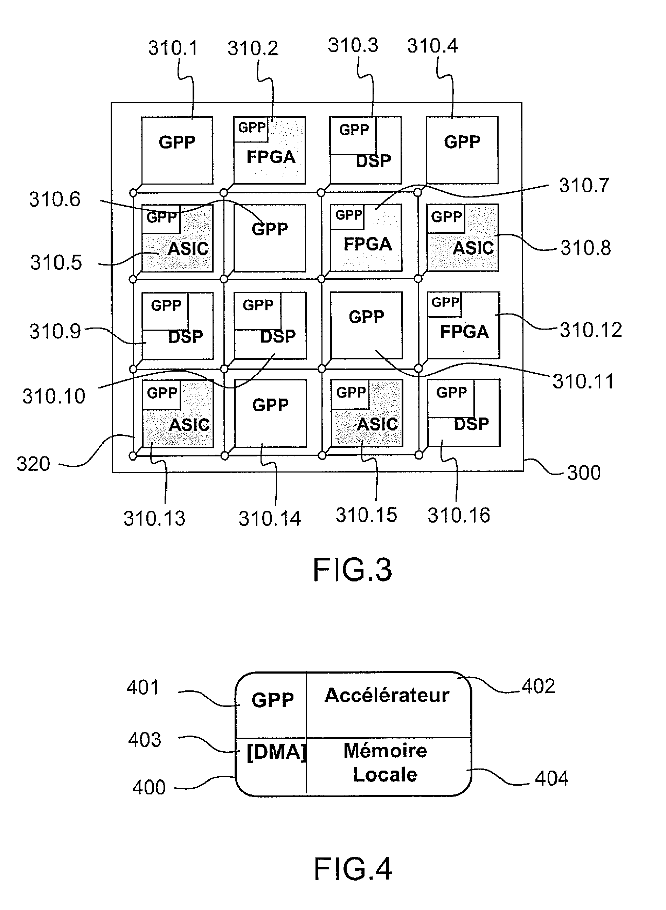

La figure 3 représente un exemple d'architecture parallèle selon l'invention. L'architecture parallèle de l'exemple comprend seize tuiles de calcul disposées sur une puce électronique 300. Ces tuiles de calcul sont reliées entre elles par un réseau de communication 320.

L'architecture selon l'invention comprend un maillage homogène de tuiles, dans lequel chaque tuile comprend un processeur généraliste éventuellement couplé à un accélérateur dédié. Dans l'exemple de la figure, cinq tuiles 310.1,310.4,310.6,310.11,310.14 comprennent un unique processeur généraliste GPP, quatre tuiles 310.3,310.9,310.10,310.16 comprennent un processeur généraliste GPP et un circuit spécialisé dans le traitement du signal DSP, quatre tuiles 310.5,310.8,310.13,310.15 comprennent un processeur généraliste GPP et un circuit intégré dédié ASIC et trois tuiles 310.2,310.7,310.12 comprennent un processeur généraliste GPP et un circuit reconfigurable FPGA.

La présence d'un processeur généraliste avec un jeu d'instructions et une architecture unique sur toutes les tuiles permet au modèle de programmation d'avoir une vue homogène sur toutes les tuiles et d'utiliser les techniques déjà existantes de la programmation parallèle sur architecture à tuiles homogènes. Le processeur généraliste est plus ou moins puissant selon les besoins et selon le rôle de l'accélérateur couplé à celui-ci, Par exemple, un accélérateur vidéo complexe peut se contenter d'un petit processeur généraliste jouant uniquement un rôle de contrôleur qui orchestre les accès mémoire et les communications de l'accélérateur. A l'autre extrême, une tuile peut être composée d'un processeur très puissant supportant par exemple du calcul flottant ou du SIMD fortement couplé ou superscalaire permettant une exécution en parallèle des instructions.

Cette variation du processeur généraliste n'est pas contradictoire avec l'hypothèse d'un seul jeu d'instructions, d'une architecture et d'une interface unique : La plupart des fabricants de processeurs connus, notamment dans le domaine des systèmes embarqués, offrent une large gamme de processeurs allant d'un microcontrôleur aux processeurs haute-performance et obéissent à la même architecture. Par exemple, la famille Cortex de ARM propose 3 gammes de processeurs, la gamme M pour Microcontrolleurs, R dans le milieu de gamme et A pour les processeurs agressifs haut de gamme. De même la famille MIPS se dote d'une famille allant du M4K (0.3 mm2 sur une technologie 0.13u) au 20Kc (8 mm2 sur même technologie).

Ainsi une architecture selon l'invention peut, par exemple, comprendre plusieurs type de tuiles. Les accélérateurs attachés aux processeurs dédiés peuvent prendre la forme d'accélérateur programmable SIMD, de FPGA, accélérateur ASIC dédié ou de tous autres accélérateurs.

Afin d'offrir une régularité du point de vue du modèle de programmation malgré l'hétérogénéité des tuiles de l'architecture, il est nécessaire de définir une vue commune de chaque tuile ou brique de base.

La figure 4 représente un exemple de tuile de calcul dans une architecture selon l'invention. Une telle tuile 400 comprend : un processeur généraliste 401, un élément de calcul spécialisé, aussi appelé accélérateur 402, une mémoire locale 404. Le processeur généraliste est la base de la tuile. L'architecture du processeur généraliste fournit des interfaces standards afin de configurer l'accélérateur, lui envoyer les données et lancer l'exécution. L'élément de calcul spécialisé 402 implémente la fonction principale de la brique, par exemple SIMD ou Accélérateur dédié. La mémoire locale 404 peut être sous la forme d'un cache ou d'une mémoire temporaire (ou scratchpad selon l'expression anglo-saxonne) en fonction de la nature et des contraintes de l'accélérateur 402.

Selon une variante de l'invention une tuile comprend en outre un dispositif d'accès direct à la mémoire 403 ou DMA, acronyme de l'expression anglo-saxonne « Direct Memory Access ». Le DMA 403 permet le transfert des données entre une mémoire principale, non représentée, et la mémoire locale 404. Le DMA 403 peut être utilisé lorsque la tuile 400 comprend un accélérateur 402 et lorsque celui-ci n'est pas fortement couplé au processeur généraliste 401.

L'interface entre un processeur généraliste et un accélérateur se décline en une interface matérielle entre le processeur et l'accélérateur et une interface logicielle qui définit comment le processeur interagit avec l'accélérateur. Cette interface dépend du type de couplage entre le processeur et l'accélérateur. On peut définir trois types de couplage : faiblement couplé, moyennement couplé et fortement couplé.

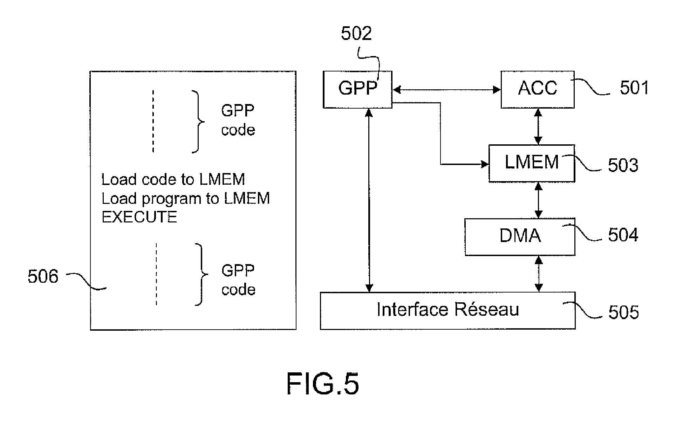

La figure 5 montre un exemple d'accélérateur faiblement couplé. Dans ce type de couplage, l'accélérateur 501 s'exécute indépendamment du processeur généraliste 502 et vise plutôt à accélérer des tâches importantes, dites gros grain, ne nécessitant pas d'interaction avec le processeur 502. La granularité d'une tâche est la taille minimale d'une tâche de calcul pouvant être manipulé par un accélérateur. L'accélérateur 501 et le processeur généraliste 502 ont accès à une mémoire locale 503 disposant d'un accès à une interface réseau 505 via un dispositif d'accès direct à la mémoire 504.Une interface logicielle 506 décrit que le processeur 502 initie les accès à la mémoire 503 (load code to LMEM et load program to LMEM) dont l'accélérateur 501 a besoin et lance l'exécution de l'accélérateur 501 (EXECUTE).

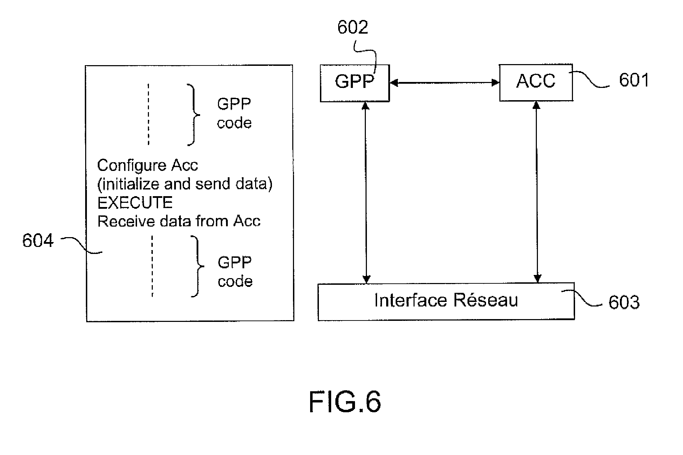

La figure 6 montre un exemple d'accélérateur moyennement couplé. Dans ce type d'interface, l'accélérateur 601 interagit directement avec le processeur 602 durant l'exécution, ces deux peuvent donc communiquer des données en cours d'exécution. L'accélérateur a aussi accès à la mémoire externe ou au réseau externe 603. Notons que la différence entre couplage faible et couplage moyen réside principalement dans la granularité de la tâche effectuée par l'accélérateur et rien n'empêche une combinaison des deux (interaction avec GPP et mémoire locale). La principale différence entre l'interface logicielle 604 d'un accélérateur moyennement couplé et l'interface logicielle précédente 506 est l'absence de mémoire locale ou de transfert DMA. En fait, l'accélérateur de la figure 6 est un cas spécial de celui de la figure 5 ou les communications s'effectuent entre le processeur et l'accélérateur.

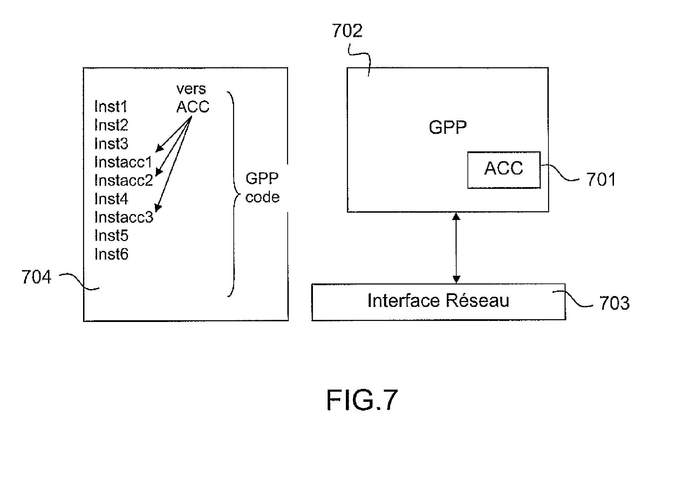

La figure 7 montre un exemple d'accélérateur fortement couplé. Ce type d'accélérateur accompli des tâches à grain relativement fin comme les accélérateurs SIMD existant sur le marché. En général, l'accélérateur 701 se situe au même niveau que l'unité de calcul principale du processeur 702 et s'interface directement avec le banc de registre. L'accélérateur peut aussi avoir accès à la mémoire. Dans ce cas l'interface logicielle comprend des instructions plus ou moins complexes directement adressées à l'accélérateur. Le processeur 702 est relié à une interface réseau 703.

L'architecture selon l'invention peut assumer plusieurs modèles mémoire. La mémoire principale peut être physiquement partagée entre les tuiles. Dans ce cas les mémoires locales sont considérées comme des caches ou des mémoires temporaires gérés par le modèle de programmation. D'un autre côté la mémoire peut être physiquement distribuée entre les différentes tuiles, chaque tuile comprenant alors une partie de la mémoire principale. Par ailleurs la mémoire principale peut être logiquement distribuée, chaque tuile ne voyant et ne pouvant adresser qu'une seule partie de la mémoire principale ou bien la mémoire dispose d'un espace d'adressage unique (logiquement partagé), chaque tuile pouvant alors accéder à la totalité de la mémoire principale.

Comme dans les architectures parallèles selon l'art connu, le réseau d'interconnexion peut être un simple bus, un bus segmenté, une boucle, ou un réseau sur puce (NoC acronyme de l'expression anglo-saxonne « Network-on-chip »).

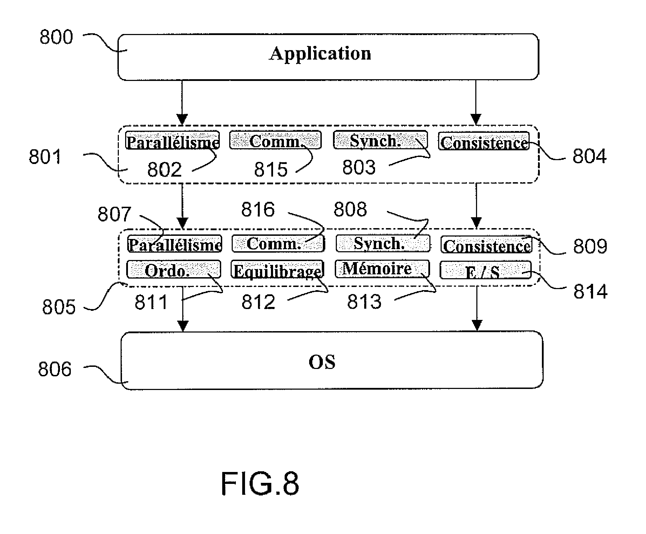

La figure 8 montre un modèle d'exécution selon l'art connu adapté à une architecture parallèle conventionnelle. L'utilisateur décrit (plus ou moins, selon le modèle de programmation) le parallélisme d'une application 800 à l'aide de primitives (ou appels de librairies) fournis par le modèle de programmation 801. Ces primitives peuvent être des primitives qui définissent le parallélisme 802 (par exemple définir des boucles dont les itérations peuvent s'exécuter en parallèle, ou définir des tâches parallèles), des primitives de communication 815 (envoie ou réception de données), ou synchronisation 803 (barrière d'exécution par exemple). Le modèle de programmation définit aussi le modèle de consistance mémoire 804. Le système d'exécution 805 (ou « Runtime System ») constitue la couche intermédiaire entre le modèle de programmation 801 et le système d'exploitation 806 et transmet au système d'exploitation les appels systèmes appropriés. Le système d'exécution 805 peut avoir un rôle plus ou moins important en fonction de la puissance et des fonctionnalités du modèle de programmation 801. On peut citer parmi ses rôles possibles : la détection et l'automatisation du parallélisme 807, l'implémentation des communications 816, la synchronisation 808, la consistance mémoire 809, l'ordonnancement 811 et l'équilibrage 812 des tâches, la gestion de la mémoire 813 et gestions des entrées/sorties 814.

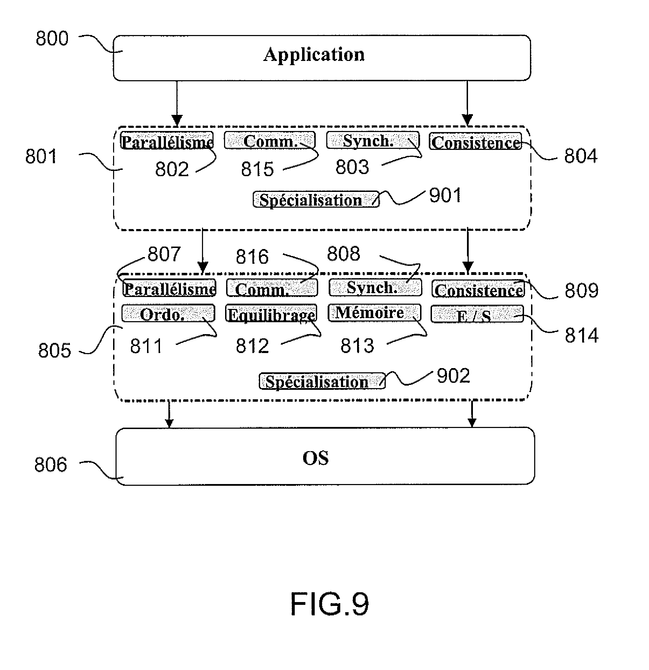

La figure 9 montre un exemple de modèle d'exécution selon l'invention adapté au système selon l'invention. Le modèle d'exécution selon l'invention reprend les caractéristiques du modèle d'exécution selon l'art connu. Mais il diffère de ce dernier en ce qu'il comporte en outre une première couche de spécialisation 901 ajoutée au modèle de programmation 801 et une seconde couche de spécialisation 902 ajoutée au système d'exécution 805. Les couches de spécialisations peuvent être plus ou moins importantes en fonction de leurs fonctionnalités.

Nous décrivons ci-dessous un modèle d'exécution minimale dans lequel la spécialisation est explicitée par le programmeur avec une seconde couche de spécialisation 902, ajoutée au système d'exécution 805.

L'association d'un processeur généraliste avec un accélérateur permet au minimum une compatibilité parfaite avec les applications multicoeurs homogènes. Une application ciblant une architecture multicoeurs homogène pourra être compilée et exécutée sur l'architecture selon l'invention sans aucune modification en supposant que l'architecture mémoire et réseaux sont identiques. L'aspect accélération intervient donc après la parallélisation, contrairement aux approches actuelles où la spécialisation fait partie intégrante du développement de l'application ce qui limite la portabilité de l'application et donc augmente les coûts de développement. Grâce à l'interface régulière entre les processeurs généralistes et les accélérateurs, chaque fil d'exécution (ou thread) peut être accéléré en fonction des accélérateurs existants et des besoins de l'application sans changer la manière dont l'application a été parallélisée. Dans la forme la plus simple de l'invention, le programmeur délimite les parties à accélérer après parallélisation de l'application.

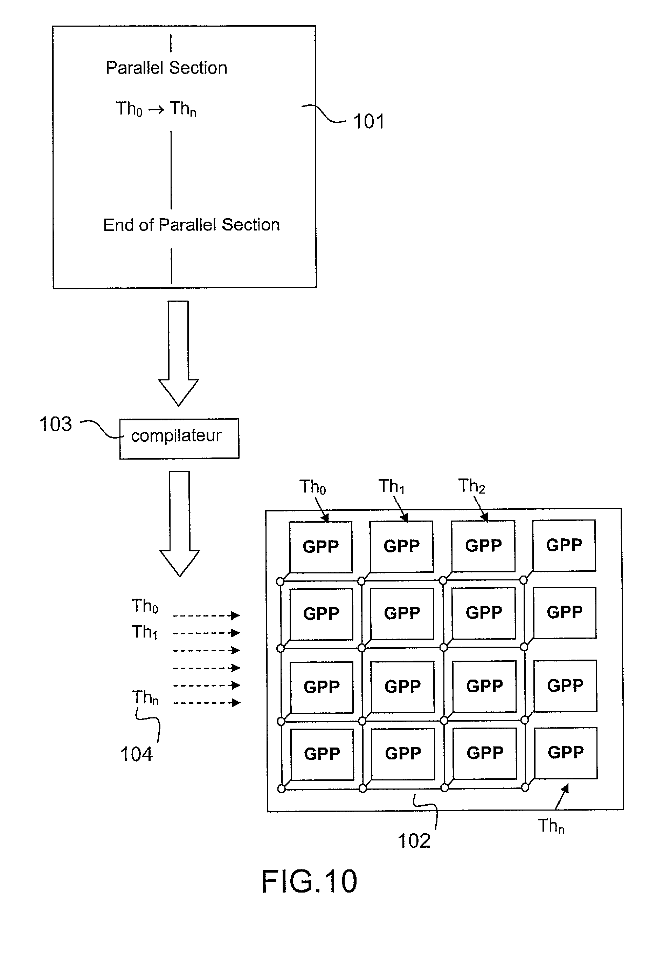

La figure 10 montre un exemple de l'exécution d'un programme parallèle 101 sur une architecture homogène 102, sans accélérateur et comprenant seize processeurs généralistes GPP. Dans cet exemple, le programmeur définit le parallélisme en délimitant une section parallèle (par exemple une boucle dont les itérations sont exécutées en parallèle ou des tâches parallèles) à l'aide d'instructions spécifiques :Parallel Section / End of Parallel Section. Le compilateur 103 ou la librairie de parallélisation s'occupent de transformer cette partie du code en différents fils 104 d'exécution parallèles (th0 à thn) qui sont exécutés en parallèle sur les processeurs parallèles.

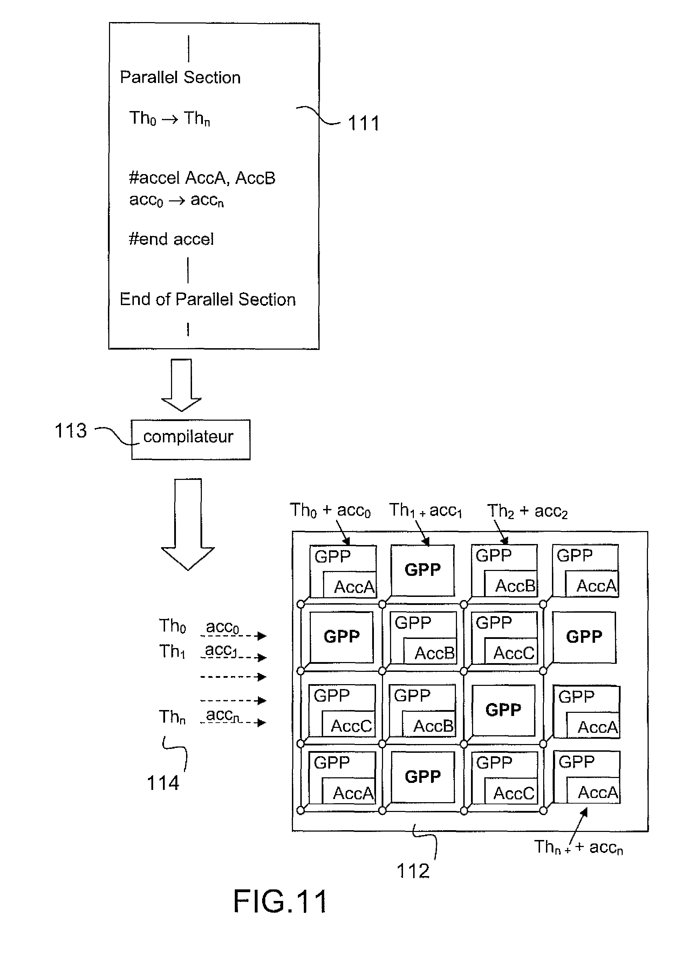

La figure 11 montre un exemple de déploiement d'un programme parallèle 111 sur une architecture selon l'invention 112 dans laquelle chaque accélérateur est associé à un processeur généraliste. Selon une variante de mise en oeuvre, le programmeur délimite les parties à accélérer au sein de la section parallèle, en spécifiant sur quel type d'accélérateur ces sections à accélérer peuvent être déployés. Dans l'exemple, une partie de la section parallèle est délimitée (#Accel / #end Accel). Deux types d'accélérateurs Acc A et Acc B sont spécifiés comme possible cible d'accélération. Le processeur généraliste est toujours une cible possible implicitement. En fonction des ressources disponibles, le compilateur 113 génère le code nécessaire pour les processeurs généraliste et chacun des accélérateurs cibles. Chaque fil d'exécution 114 est exécuté soit sur le processeur généraliste uniquement ou sur un processeur généraliste et un des accélérateurs cibles spécifiés. Si un accélérateur n'est pas spécifié dans la liste des accélérateurs cibles possibles (comme Acc C dans l'exemple), le fil d'exécution est exécuté uniquement sur le processeur généraliste.

La spécialisation peut être statique ou dynamique. Avec la spécialisation statique, la spécialisation et l'affectation des tâches aux accélérateurs sont effectués statiquement lors de la compilation, et le runtime affecte chaque tâche spécialisée à l'accélérateur correspondant selon la répartition spécifiée par le compilateur ou la librairie associée.

Avec la spécialisation dynamique, la spécialisation et l'affectation des tâches aux accélérateurs sont effectuées dynamiquement par le runtime lors de l'exécution selon la disponibilité des ressources lors de l'exécution. Une spécialisation dynamique permet une meilleure adaptation de l'exécution de l'application en fonction de la disponibilité des ressources et autres contraintes dynamiques mais implique une plus grande complexité de la couche spécialisation du runtime.

Afin de préserver l'homogénéité de l'architecture au niveau du modèle de programmation, le programmeur peut, par exemple, décrire l'application de la même manière que pour une architecture parallèle en indiquant, en outre, des possibilités d'affectation des tâches sur des types d'accélérateurs.

## Revendications

1. Système multiprocesseur sur puce électronique (300) comprenant au moins deux tuiles de calcul, chacune des tuiles de calcul comportant un processeur généraliste, et des moyens d'accès à un réseau de communication (320), lesdites tuiles de calcul étant reliées entre elles par ledit réseau de communication, ledit système multiprocesseur étant
**caractérisé en ce que :**
- un processeur généraliste mettant en oeuvre un jeu d'instructions qui définit l'ensemble des opérations à exécuter par ledit processeur, les processeurs généralistes ont le même jeu d'instructions;
- au moins une des tuiles de calcul comprend, en outre, un accélérateur couplé au processeur généraliste accélérant des tâches de calcul dudit processeur généraliste.

2. Système multiprocesseur selon la revendication 1, **caractérisé en ce qu'**il est apte à exécuter un programme parallèle développé pour un système multiprocesseurs homogènes sans modification du programme.

3. Système multiprocesseur selon l'une des revendications 1 ou 2, **caractérisé en ce qu'**une tuile de calcul (400) comprend, en outre, une mémoire locale (404).

4. Système multiprocesseur selon la revendication 3, **caractérisé en ce que** le système comprenant une mémoire principale, une tuile de calcul (400) comprend, en outre, un dispositif d'accès direct à la mémoire (403) permettant le transfert des données entre la mémoire principale et la mémoire locale (404).

5. Système multiprocesseur selon l'une des revendications 1 à 4, **caractérisé en ce que** l'accélérateur est de type : circuit intégré dédié, ou accélérateur programmable ou circuit reconfigurable.

6. Système multiprocesseur selon l'une des revendications 3 à 5, **caractérisé en ce que** la mémoire principale est physiquement partagée entre les tuiles, chaque tuile pouvant accéder à ladite mémoire principale.

7. Système multiprocesseur selon l'une des revendications 3 à 5, **caractérisé en ce que** la mémoire principale est physiquement distribuée entre les différentes tuiles, chaque tuile comportant alors une partie de la mémoire principale.

8. Système multiprocesseur selon l'une des revendications précédentes, **caractérisé en ce que** le réseau de communication est de type: bus simple, bus segmenté, boucle ou réseau sur puce.

## Revendications modifiées

### Revendications modifiées conformément à la règle 137(2) CBE.

**1.** Système multiprocesseur sur puce électronique (300) comprenant au moins deux tuiles de calcul, chacune des tuiles de calcul comportant un processeur généraliste, et des moyens d'accès à un réseau de communication (320), lesdites tuiles de calcul étant reliées entre elles par ledit réseau de communication, ledit système multiprocesseur étant
**caractérisé en ce que** :
- un processeur généraliste mettant en oeuvre un jeu d'instructions qui définit l'ensemble des opérations à exécuter par ledit processeur, les processeurs généralistes ont le même jeu d'instructions ;
- **en ce qu'**au moins une des tuiles de calcul comprend, en outre, un accélérateur couplé au processeur généraliste accélérant des tâches de calcul dudit processeur généraliste,
- et **en ce que** les tuiles sont hétérogènes.

**2.** Système multiprocesseur selon la revendication 1, **caractérisé en ce qu'**il est apte à exécuter un programme parallèle développé pour un système multiprocesseurs homogènes sans modification du programme.

**3.** Système multiprocesseur selon l'une des revendications 1 ou 2, **caractérisé en ce qu'**une tuile de calcul (400) comprend, en outre, une mémoire locale (404).

**4.** Système multiprocesseur selon la revendication 3, **caractérisé en ce que** le système comprenant une mémoire principale, une tuile de calcul (400) comprend, en outre, un dispositif d'accès direct à la mémoire (403) permettant le transfert des données entre la mémoire principale et la mémoire locale (404).

**5.** Système multiprocesseur selon l'une des revendications 1 à 4, **caractérisé en ce que** l'accélérateur est de type : circuit intégré dédié, ou accélérateur programmable ou circuit reconfigurable.

**6.** Système multiprocesseur selon l'une des revendications 3 à 5, **caractérisé en ce que** la mémoire principale est physiquement partagée entre les tuiles, chaque tuile pouvant accéder à ladite mémoire principale.

**7.** Système multiprocesseur selon l'une des revendications 3 à 5, **caractérisé en ce que** la mémoire principale est physiquement distribuée entre les différentes tuiles, chaque tuile comportant alors une partie de la mémoire principale.

**8.** Système multiprocesseur selon l'une des revendications précédentes, **caractérisé en ce que** le réseau de communication est de type : bus simple, bus segmenté, boucle ou réseau sur puce.
